# NEUE EUROPÄISCHE PATENTSCHRIFT

(11) **EP 2 376 300 B2**
(45) Veröffentlichungstag und Bekanntmachung des Hinweises auf die Entscheidung über den Einspruch: **04.12.2019**
(45) Hinweis auf die Patenterteilung: 20.07.2016
(21) Anmeldenummer: 09795682.5
(22) Anmeldetag: 12.11.2009
(51) Int. Cl.: B60G 7/00, B60G 3/00

(54) **QUERLENKER EINES KRAFTFAHRZEUGES**
LATERAL CONTROL ARM OF A MOTOR VEHICLE
BRAS LATÉRAL D'UN VÉHICULE AUTOMOBILE

(30) Priorität: 11.12.2008 DE 102008061833
(43) Veröffentlichungstag der Anmeldung: 19.10.2011
(73) Patentinhaber: Ford-Werke GmbH, 50735 Köln (DE)
(72) Erfinder: GERHARDS, Thomas, 52382 Niderzier (DE); FRANTZEN, Michael Johannes, 52076 Aachen (DE); SIMON, Marc, 50735 Köln (DE); DAVID, Wolfgang, 52074 Aachen (DE); BAYER, Martina, 50259 Pulheim (DE); WOHLERS, Jens, 49448 Lemförde (DE); SCHEPER, Frank, 49624 Löningen (DE); KLOSTERMEIER, Karsten, 324779 Hille (DE); SANDER, Karsten, 50259 Pulheim (DE)
(74) Vertreter: Wettlaufer, Frank
(86) Internationale Anmeldenummer: PCT/DE2009/001622
(87) Internationale Veröffentlichungsnummer: WO 2010/066226

(56) Entgegenhaltungen:
- EP-A2- 1 167 092
- EP-A2- 1 223 058
- DE-A1- 2 845 345
- DE-A1- 4 020 311
- DE-A1- 10 338 625
- DE-A1- 19 522 916
- DE-A1- 19 841 805
- DE-A1-102006 053 030
- JP-A- 7 119 729
- US-A1- 2005 104 315

## Beschreibung

Die Erfindung betrifft einen Querlenker mit einem Grundkörper, der zumindest einen ersten Befestigungsbereich zum Anlenken an ein Fahrzeugrahmenelement und zumindest einen weiteren Befestigungsbereich zum Anlenken an einen Radträger aufweist, wobei der Grundkörper zumindest einen Radschenkel aufweist.

Aus der EP 1 167 092 B1 ist ein Querlenker einer Radaufhängung für ein Rad eines Kraftfahrzeuges bekannt, der ein einstückiges Gussteil mit drei Befestigungsbereichen aufweist. Zwei Befestigungsbereiche dienen zum Befestigen des Querlenkers an einem Chassis. Der dritte Befestigungsbereich dient zum Anlenken an einer Lageranordnung des Rades. Um den Querlenker unter anderem hinsichtlich von Fahrzeugsicherheitsaspekten auszuführen, schlägt die EP 1 167 092 B1 vor, dass in einem flächigen Bereich mindestens ein Durchbruch bzw. drei Durchbrüche vorgesehen sind. An einem der Durchbrüche ist eine an Materialstärke zunehmende Rampe vorgesehen. Um einen sich definiert verformenden Querlenker zu erreichen, ist einer der Durchbrüche hantelförmig ausgeführt. Dieser Durchbruch ist zwischen der Rampe und dem Befestigungsbereich zum Anlenken an der Lageranordnung des Rades angeordnet. Ein zweiter hantelförmiger Durchbruch ist sich zum ersten Befestigungsbereich zur Befestigung an dem Chassis verjüngend ausgeführt. Insofern soll der Querlenker der EP 1 167 092 B1 Aufprallenergien aufnehmen und durch seine Verformung, andere schwer zugängliche Bauteile vor Aufprallenergien schützen.

Die DE-OS 28 45 345 befasst sich mit einer Vorderradaufhängung für Kraftfahrzeuge. Bei einem Kollisionsfall können im Bereich der Stirnwand angelenkte Längslenker die Stirnwand erheblich beschädigen, oder gar in den Fahrgastraum eindringen, so dass Fahrgäste durch Aufhängungsteile verletzt werden können. Um dies zu vermeiden, schlägt die DE-OS 28 45 345 vor, als Längslenker ein unter Druck mit vorbestimmter Deformationscharakteristik verformbares Element vorzusehen. Hierzu könnten zum Beispiel Kröpfungen, Kerben, Einschnürungen, Scherverbindungen oder Reibschlussverbindungen an dem Längslenker vorgesehen sein, um die Druckfestigkeit zu begrenzen.

Die DE 103 38 625 A1 offenbart einen Queröder Schräglenker, der die Räder eines Fahrzeuges gelenkig lagert, wobei mindestens ein zwischen zwei am Fahrzeugaufbau in Fahrtrichtung zumindest annähernd hintereinander gelegenen Gelenkstellen verlaufender Gelenkarm gekrümmt ausgeführt ist. Auf mindestens zwei Dritteln eines zwischen zwei Gelenkstellen gelegenen Abstandes weist der Lenker einen gebogenen Abschnitt auf. Die Mittellinie des gebogenen Abschnitts hat von einer gedachten Verbindungslinie zwischen zwei Endpunkten des gebogenen Abschnitts einen maximal Abstand, der mindestens 20% der Länge der Verbindungslinie beträgt. Damit soll eine Radaufhängung erreicht werden, welche im Falle einer Kollision ohne Blockbildung einen Crashprozess stoßenergieverzehrend unterstützt.

Auch die DE 10 2006 053 030 A1 geht von dem Problem einer Blockbildung aus, wobei bei Unfällen, wie beispielsweise einem Frontalaufprall, ein großes Sicherheitsrisiko für Fahrzeuginsassen darin bestünde, dass ein Fahrwerk des Fahrzeuges einen Block bildet, und dadurch ein energierverzehrendes Knautschen eines Forderwagens des Fahrzeuges im Bereich der Fahrwerksanbindung verhindert würde. Hierbei bilden die steifen Fahrwerksteile zusammen mit den Lenkeranbindungen einen Block, welcher sich nur wenig deformieren lässt, und oft als ganzes auf eine Stirnwand der Fahrgastzelle drückt. In der Folge hiervon wird zuwenig Stoßenergie abgebaut, und zudem das Fahrwerk gegen den Fußraum der Fahrgastzelle gedrückt, wodurch insbesondere in diesem Bereich ein erhöhtes Verletzungsrisiko bestehen kann. Um einen Quer- oder Schräglenker zu erreichen, welcher sich insbesondere beim Überschreiten einer vordefinierten Kraft energieabsorbierend zusammendrücken lässt, schlägt die DE 10 2006 053 030 A1 vor, dass ein erster Lenkerarm einen in Fahrtrichtung vorne gelegenen Deformationsabschnitt und einen in Fahrtrichtung dahinter gelegenen steiferen Abschnitt aufweist, wobei sich der erste Lenkerarm bei einem Frontcrash in Fahrzeuglängsrichtung überwiegend in seinem Deformationsabschnitt energieabsorbierend deformieren soll. Der erste Lenkerarm ist dabei im wesentlichen in Fahrzeuglängsrichtung orientiert, und verbindet die vordere und hintere Gelenkstelle zur Anbindung des Quer- oder Schräglenkers an das Chassis, und soll sich insbesondere bei einem Frontalaufprall oder einem so genannten Bordsteinrempler verformen können.

Ein Querlenker kann mit drei Befestigungsbereichen (Dreipunktlenker) ausgeführt sein, wobei ein erster und ein zweiter Befestigungsbereich mit dem Fahrzeugrahmenelement und der weitere, also dritte Befestigungsbereich über eine Zapfenverbindung mit einem Radträger verbunden ist. Es wurde nun beobachtet, dass die Zapfenverbindung zerstört werden kann, wenn ein Fahrzeugrad mit einer gewissen Geschwindigkeit, sei es winklig oder frontal gegen eine z.B. stufenartige Erhebung, beispielsweise einen Bordstein auftrifft. Hierbei hatte der Fahrzeugführer das Empfinden, dass die Zapfenverbindung vor dem Aufprall gerissen bzw. zerstört war, was den Unfall verursacht hätte. Dieses Empfinden konnte aber nicht widerlegt werden, denn es ist durchaus möglich, dass die Zapfenverbindung bzw. der Zapfen tatsächlich vor der Kollision zerstört war. Andererseits ist es aber auch möglich, dass die Zapfenverbindung bzw. der Zapfen als Folge der Kollision des Rades mit dem beispielhaften Bordstein zerstört wurde.

Der Erfindung liegt ausgehend von dem vorgenannten Problem die Aufgabe zugrunde, einen Querlenker der eingangs genannten Art mit einfachen Mitteln so zu verbessern, dass ein Zerstören der Zapfenverbindung weitgehend vermieden ist, wenn das Rad winklig und/oder frontal und/oder quer gegen eine stufenartige Fahrbahnerhebung stößt bzw. anschlägt.

Erfindungsgemäß wird die Aufgabe durch einen Querlenker mit den Merkmalen des Anspruchs 1 gelöst, wobei ein Übergangsbereich von dem Radschenkel zum weiteren Befestigungsbereich vorgesehen ist, wobei der Übergangsbereich so ausgeführt ist, dass eine in Längsrichtung des Radschenkels wirkende Verformungs- oder Deformationszone gebildet ist.

Der Erfindung liegt die Erkenntnis zugrunde, dass ein konventionell ausgeführter Querlenker, aus einem Leichtmetall, wie zum Beispiel aus Aluminium hergestellt ist, wobei dessen beispielsweise drei Befestigungsbereiche in einem nicht montierten Zustand im Wesentlichen auf einer gemeinsamen Ebene angeordnet sind. Der Querlenker ist mit seinem ersten und zweiten Befestigungsbereich jeweils an einem Fahrzeugrahmenelement, wie beispielsweise einem Hilfsrahmen angelenkt, und mit seinem weiteren, also dritten Befestigungsbereich z.B. über eine Zapfenverbindung an einem Radträger angelenkt. Diese bekannte Ausgestaltung dient in erster Linie dazu, dass der Querlenker insgesamt hinsichtlich von Gewichtsersparnissen (Leichtmetall) ausgeführt ist, wobei eine geradlinige Kraftübertragung von dem Radträger zum beispielhaften Hilfsrahmen erreicht wird.

Mit der Erfindung dagegen wird ein Querlenker zur Verfügung gestellt, welcher an seinem Radschenkel, bzw. in dem Übergangsbereich vorteilhaft gezielt so ausgeführt bzw. so geschwächt ist, dass sich insbesondere der Übergangsbereich verformt, vorzugsweise buckelartig verformt, wenn das Rad beispielsweise auf bzw. an einen Bordstein prallt, stößt oder anschlägt. Damit ist zunächst ein Zerstören der Zapfenverbindung des Querlenkers zum Radträger bzw. ein Trennen des Querträgers von dem Radträger vermieden, da insbesondere der Übergangsbereich in Längsrichtung des Radschenkels gesehen ausweicht, bzw. vorbestimmt deformiert wird, und die Aufprallenergie um den so aufgenommenen erheblichen Anteil der Verformungsenergie reduziert wird.

Ein weiterer Vorteil des vorteilhaft ausgeführten Querlenkers mit seinem zwischen dem Radschenkel und dem weiteren, also dritten Befestigungsbereich angeordneten Übergangsbereich ist darin zu sehen, dass auch ein Zerstören des beispielhaften Hilfsrahmens durch den aufgenommenen, erheblichen Anteil an Verformungsenergie, um welchen sich die Aufprallenergie reduziert, vermeidbar ist.

In günstiger Ausführung ist vorgesehen, dass sich der Übergangsbereich von seiner zum Radschenkel orientierten Seite in Richtung zum weiteren, also dritten Befestigungsbereich im Querschnitt gesehen stufenlos bis zu einer Grenzquerschnittsfläche kontinuierlich verjüngt.

In zweckmäßiger Ausgestaltung, die gemäß der beanspruchten Erfindung ist, ist vorgesehen, dass der Querlenker bzw. sein Grundkörper einteilig als Dreipunktlenker (drei Befestigungsbereiche) ausgeführt ist, der eine flächige Basis umgebende Hochstege aufweist, so dass der Grundkörper im Querschnitt gesehen ein H-Profil aufweist, wobei die Hochstege des H-Profils in den Übergangsbereich weitergeführt sind, und sich in Richtung zum weiteren, also dritten Befestigungsbereich bis auf die Grenzquerschnittsfläche verjüngen. Vorteilhaft ist der Übergangsbereich zumindest mit einem Übergangsbereichabschnitt flächig ausgeführt, wobei sich die, die Basis umgebenden Hochstege innerhalb des Übergangsbereiches bezogen auf die Basis zumindest einseitig, bevorzugt beidseitig, also oberhalb und unterhalb der Basis verjüngen.

Die Grenzquerschnittsfläche ist bevorzugt so bemessen, dass der Querlenker noch die erforderlichen Betriebseigenschaften bei weitgehend kollisionsfreien Betriebzuständen aufweist, und sich der Übergangsbereich erst verformt, wenn eine Grenzbelastung überschritten ist.

Um eine gezielte, bevorzugt buckelartige Verformung des Übergangsbereiches zu erreichen, ist ft vorgesehen, dass der Übergangsbereich so gebogen verlaufend ausgeführt ist, dass der Übergangsbereich mit einem sich an den Radschenkel anschließenden ersten Steg aus der Ebene der Basis herausgeführt ist, und mit einem sich an den ersten Steg anschließenden zweiten Steg wieder in Richtung zur Basisebene orientiert ist. In bevorzugter Ausgestaltung ist der Übergangsbereich buckelartig, also quasi V-förmig mit dem sich an den Radschenkel anschließenden ersten Steg und dem sich an den ersten Steg anschließenden zweiten Steg ausgeführt, wobei ein Zenit des Übergangsbereiches zwischen den beiden gegenläufig orientierten Stegen verrundet ausgeführt ist. Mit dieser zweckmäßigen Ausgestaltung wird eine vorgegebene Deformationscharakteristik des Übergangsbereiches erreicht, die bevorzugt so ausgeführt ist, dass sich der Übergangsbereich in Längsrichtung des Radschenkels gesehen deformiert, wenn eine Grenzbelastung überschritten ist.

In erfindungsgemäßer Ausgestaltung ist vorgesehen, dass sich der Übergangsbereich im Bereich seines ersten Steges konusartig bis auf die Grenzquerschnittsfläche verjüngt, wobei der Übergangsbereich nach Erreichen der Grenzquerschnittsfläche mit dieser sich dann unverändernden Grenzquerschnittsfläche in Richtung zum dritten Befestigungsbereich weitergeführt ist. Insofern wird die Grenzquerschnittsfläche des gebogen bzw. bevorzugt buckelartig ausgeführten Übergangsbereiches bereits im Bereich des ersten Steges des Übergangsbereiches erreicht. Hat der Übergangsbereich seine Grenzquerschnittsfläche erreicht, kann vorgesehen sein, den Übergangsbereich als Hohlkörper oder bevorzugt als Vollkörper in Richtung zum weiteren also dritten Befestigungsbereich weiterzuführen. Der Übergangsbereichabschnitt, welcher in Richtung zum weiteren, also dritten Befestigungsbereich weitergeführt ist, ist flächig ausgeführt.

In bevorzugter Ausführung kann vorgesehen sein, dass der Übergangsbereich so ausgeführt ist, dass dieser mit seinem Zenit in Richtung zu einem Boden oder nach oben orientiert ist wenn der Querlenker an dem Fahrzeug montiert ist, so dass der weitere, also dritte Befestigungsbereich über die Zapfenverbindung von unten oder von oben mit dem Radträger verbindbar ist.

Weiter kann vorteilhaft vorgesehen sein, dass der Übergangsbereich so ausgeführt ist, dass der weitere, also dritte Befestigungsbereich mit seiner Mittelachse winklig zur Mittelachse des Radschenkels angeordnet ist, wobei der Winkel zwischen beiden Mittelachsen bevorzugt ein spitzer Winkel (< 90°) ist.

Der Querlenker ist aus einem Leichtmetall, z.B. aus Aluminium hergestellt, und weist eine in Aufsicht gesehen im Wesentlichen L-förmige Ausgestaltung auf.

In Figur 1 ist ein Querlenker nach dem Stand der Technik in Aufsicht dargestellt.
- Fig. 2: zeigt einen Ausschnitt einer nicht gemäß der beansprüchten Erfindung ausgeführten Ausführung eines Querlenkers, und Fig.2
- Fig. 3: zeigt eine Schnittdarstellung des Querlenkers nach Figur 2,

Weitere vorteilhafte Ausgestaltungen der Erfindung sind in den Unteransprüchen und der folgenden Figurenbeschreibung offenbart. Es zeigen:
- Fig. 4: einen Querlenker in einer Ausführung in einer Aufsicht,
- Fig. 5: den Querlenker aus Figur 4 in einer Seitenansicht,
- Fig. 6: einen Ausschnitt des Querlenkers aus Figur 4 in einer Seitenansicht mit Zapfen, und
- Fig. 7: den Querlenker aus den Figur 4 in einer Einbaulage.

In den unterschiedlichen Figuren sind gleiche Teile stets mit denselben Bezugszeichen versehen, weswegen diese in der Regel auch nur einmal beschrieben werden.

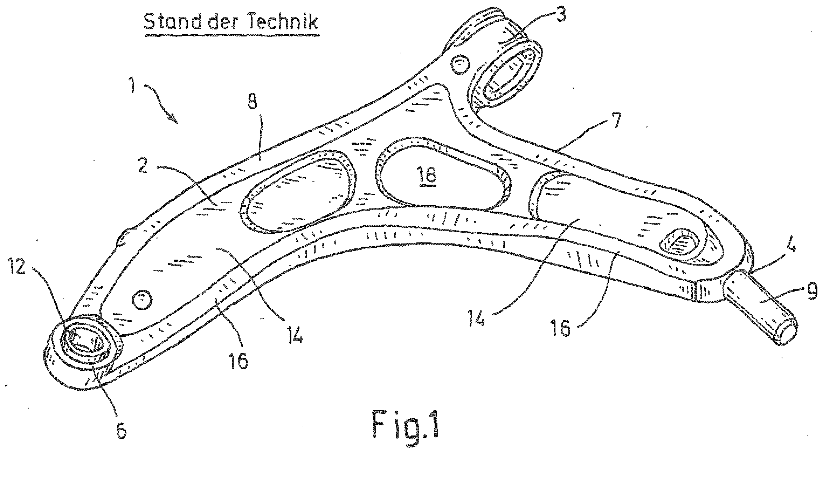

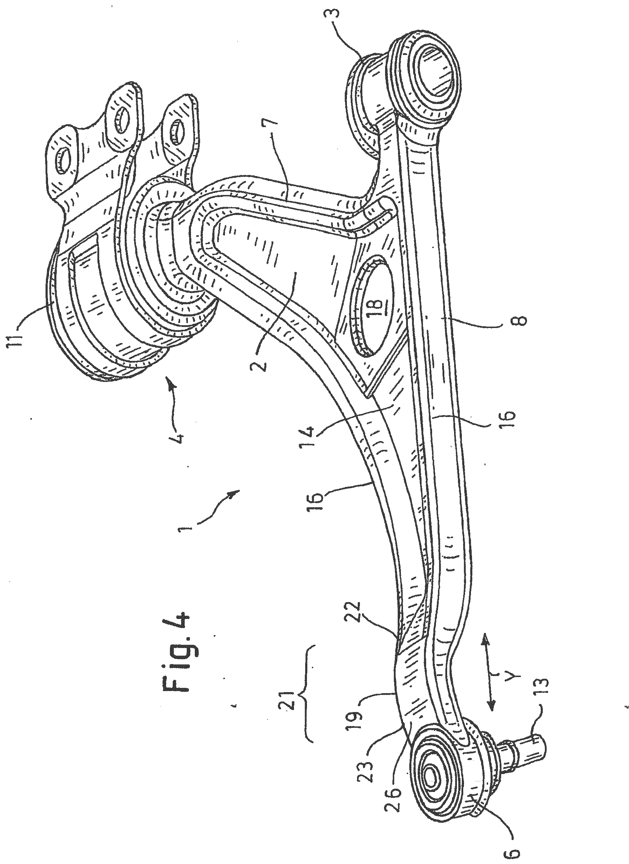

Figur 1 zeigt einen Querlenker 1 nach dem Stand der Technik. Der Querlenker 1 weist einen Grundkörper 2 auf, der einen ersten Befestigungsbereich 3 und einen zweiten Befestigungsbereich 4 zum Anlenken an ein nicht dargestelltes Fahrzeugrahmenelement, z.B. an einen Hilfsrahmen aufweist. Der Querlenker 1 weist weiter einen weiteren, also dritten Befestigungsbereich 6 zum Anlenken an einen nicht dargestellten Radträger auf. Der Grundkörper 2 ist im wesentlichen L-Förmig mit einem Rahmenschenkel 7 und einem Radschenkel 8 ausgeführt. An dem Rahmenschenkel 7 sind der erste und zweite Befestigungsbereich 3 und 4 angeordnet. Der erste Befestigungsbereich 3 ist z.B. hülsenartig ausgeführt, wobei der zweite Befestigungsbereich 4 beispielhaft als Zapfen 9 ausgeführt, welcher von einem Lagerelement 11 (siehe Figur 4) umfasst ist.

Der dritte Befestigungsbereich 6 ist an dem Radschenkel 8 angeordnet, und bildet eine Aufnahme 12 für einen Zapfen 13 (siehe Figur 4). Über den Zapfen 13 wird der Querlenker 1 an dem Radträger angelenkt.

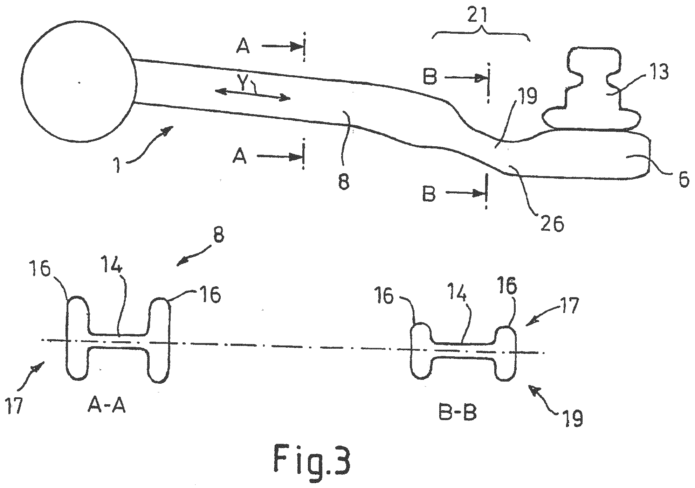

Der Grundkörper 2 weist weiter eine Basis 14 auf, welche von Hochstegen 16 umfasst ist, so dass der Grundkörper 2 im Querschnitt gesehen ein H-Profil 17 (siehe Figur 3, Schnitt A-A) aufweist.

In der in Figur 1 dargestellten nicht eingebauten Lage sind die drei Befestigungsbereiche 3, 4 und 6 im Wesentlichen in einer Ebene des Grundkörpers 2 angeordnet. Zudem kann der Grundkörper 2 wie dargestellt beispielsweise in seiner Basis 14 eine Ausnehmung 18 aufweisen.

Wie der Figur 1 weiter zu entnehmen ist, sind die Basis 14 und die, diese umgebenden Hochstege 16 bis zu den jeweiligen Befestigungsbereichen 3,4 und 6 geführt, so dass der Querlenker 1 in der Einbaulage eine geradlinige Kraftübertragung von dem Radträger zum Fahrzeugrahmenelement ermöglicht.

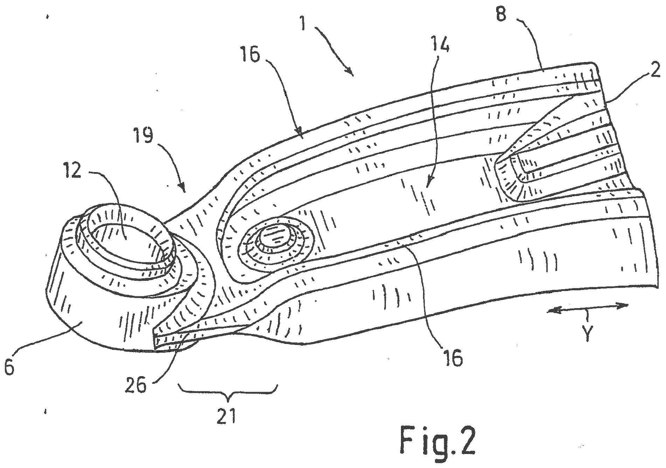

Figur 2 zeigt eine nach einer nicht gemäß der beansprüchten Erfindung ausgeführten Ausgestaltung eines Querlenkers 1, wobei in Figur 2 lediglich ein Ausschnitt des Radschenkels 8 vergrößert dargestellt ist. Vorteilhaft weist der Grundkörper 2 an seinem Radschenkel 8 einen Übergangsbereich 19 auf, welcher zwischen dem Radschenkel 8 und dem dritten Befestigungsbereich 6 angeordnet ist. Der Übergangsbereich 19 ist einstückig mit dem Grundkörper 2 hergestellt.

In günstiger Ausgestaltung ist der Übergangsbereich 19 so ausgeführt, dass eine in Längsrichtung Y des Radschenkels 8 wirkende Verformungs- oder Deformationszone 21 gebildet ist.

Bei dem in Figur 2 dargestellten Ausführungsbeispiel wird die Verformungs- oder Deformationszone 21 gebildet, indem die Hochstege 16 sich in Richtung zum dritten Befestigungsbereich 6 bis auf eine Grenzquerschnittsfläche verjüngend ausgeführt sind. Bei dem in Figur 2 dargestellten Ausführungsbeispiel bildet die Materialstärke der Basis 14 die Grenzquerschnittsfläche, wobei die Basis 14 innerhalb des Übergangsbereiches 19 bezogen auf die ursprüngliche Materialstärke leicht verstärkt sein kann, und wobei diese Ausführung möglich ist, wenn die Betriebseigenschaften des Querlenkers 1 bei normalen Betriebzuständen, also bei einem weitgehend kollisionsfreien Betriebszustand noch hinreichend erfüllt sind.

Wie in Figur 3 dargestellt, ist bevorzugt vorgesehen, dass sich die Hochstege 16 im Übergangsbereich 19 auf einen Bruchteil der ursprünglichen Steghöhe einseitig oder beidseitig der Basis 14, also in der Zeichnungsebene oberhalb und/oder unterhalb der Basis 14 gleichmäßig verjüngen, wie die eingezeichneten Schnit- ten A-A und B-B zeigen sollen. Der Schnitt A-A zeigt eine ursprüngliche Steghöhe, wobei der Schnitt B-B eine sich verjüngte Steghöhe innerhalb des Übergangsbereiches 19 zeigt. Bezogen auf die ursprüngliche Steghöhe weist der Übergangsbereich 19 eine bis auf in etwa 70% stufenlos abnehmende Steghöhe auf, wobei dieser Betrag natürlich nur beispielhaft genannt und nicht beschränkend sein soll. Die Basis 14 bleibt in ihrer Materialstärke dabei unverändert. Mit dem Betrag der Grenzquerschnittsfläche wird der Übergangsbereich 19 mit seinem Übergangsbereichabschnitt 26 in Richtung zum dritten Befestigungsbereich 6 weitergeführt, welcher in der Schnittdarstellung gemäß Figur 3 entsprechend dargestellt ist. Im Schnitt nach Figur 3 gesehen, ist der Übergangsbereich 19 quasi als materialreduzierte Beule bzw. Querschnitt ausgeführt.

Bei der vorteilhaften Ausgestaltung nach den Figuren 2 und 3 wird ein Querlenker 1 zur Verfügung gestellt, welcher in seinem Übergangsbereich 19 bzw. in der Verformungs- oder Deformationszone 21 eine vorbestimmte, gezielte Deformationscharakteristik aufweist. Würde ein an dem Radträger befestigtes Rad gegen eine stufenartige Fahrbahnerhebung, zum Beispiel frontal und/oder winklig gegen einen Bordstein stoßen bzw. prallen oder quer anschlagen, würde sich der Übergangsbereich 19 entlang der Längsrichtung Y des Radschenkels 8 verformen, so dass der Übergangsbereich 19 einen erheblichen Anteil der Aufprallenergie in Verformungsenergie umwandelt. Damit ist sichergestellt, dass die Zapfenverbindung zwischen dem Radträger und dem Querlenker 1 nicht zerstört wird. Weiter kann so ein erheblicher Anteil der Aufprallenergie von dem Fahrzeugrahmenelement ferngehalten werden, so dass also quasi eine Doppelfunktion mit dem vorteilhaft ausgeführten Querlenker 1 erreicht wird. Zum einen wird die Zapfenverbindung zum Radträger und zum anderen die Anlenkung des Querlenkers an den Fahrzeugrahmenelement vor den bisher geradlinig und vollständig (Stand der Technik Figur 1) übertragenen Aufprallenergien geschützt. Denn mit der zweckmäßigen Ausgestaltung des Übergangsbereiches 19 gemäß der Erfindung wird die Aufprallenergie um den Betrag der hier aufgenommenen Verformungsenergie reduziert.

In Figur 4 ist eine Erfindungsgemäß vorteilhafte Ausgestaltung des Querlenkers 1, insbesondere mit dem Übergangsbereich 19 dargestellt. Vorteilhaft ist der Übergangsbereich 19 dabei gebogen verlaufend bzw. buckelartig ausgeführt, so dass die in Längsrichtung Y wirkende Verformungs- oder Deformationszone 21 gebildet ist.

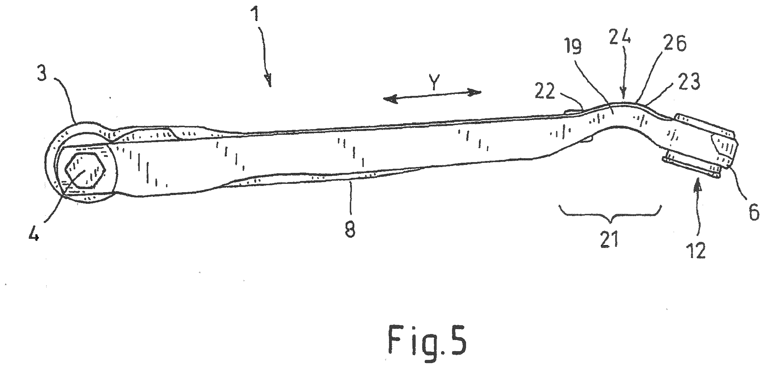

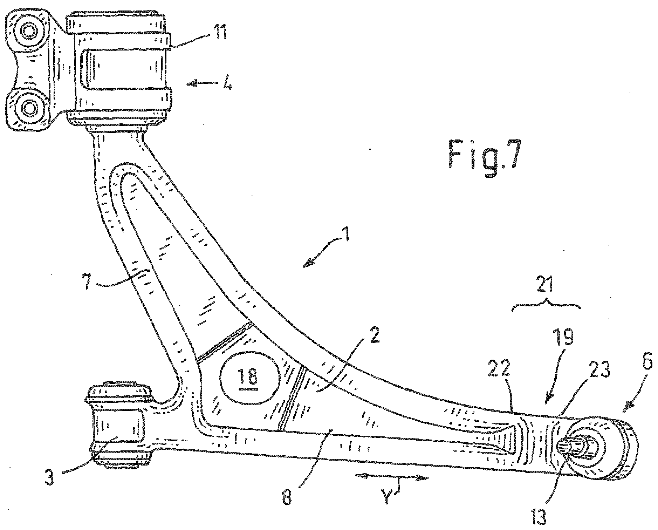

Der Übergangsbereich 19 weist einen ersten Steg 22 (Figur 5) auf, an dem sich ein zweiter Steg 23 einstückig anschließt. Zwischen beiden Stegen 22 und 23 ist ein Zenit 24 angeordnet, welcher bevorzugt verrundet ausgeführt ist. In Seitenansicht (Figur 5) weist der Übergangsbereich 19 quasi einen V-förmigen Verlauf auf, wobei der erste Steg 22 aus der Ebene der Basis 14 herausführt und der sich darin anschließende zweite Steg 23 gegenläufig dazu wieder in Richtung zur Ebene der Basis 14 zurückführt. In Figur 5 ist der Querlenker 1 in einer Nicht-Einbaulage gezeigt, weswegen der V-förmige Verlauf des Übergangsbereiches 19 mit seinem Zenit 24 in der Zeichnungsebene nach oben ausgerichtet ist. In Figur 7 dagegen ist die Einbaulage des Querlenkers 1 gezeigt, bei welcher der Übergangsbereich 19 mit seinem Zenit 24 zu einem Boden orientiert ist. Bei dem in Figur 5 gezeigten Ausführungsbeispiel weisen die beiden gegenläufigen Stege 22 und 23 einen gleichen Steigungswinkelbetrag auf, wobei dies nur beispielhaft sein und nicht beschränkend wirken soll.

Wie den Figuren 4 und 5 weiter entnehmbar ist, verjüngt sich der Übergangsbereich 19 von dem Radschenkel 8 in Richtung zum dritten Befestigungsbereich 6 bis auf die Grenzquerschnittsfläche. Vorteilhaft ist hierbei, dass sich der Übergangsbereich 19 bereits im Bereich seines ersten Steges 22 bis auf die Grenzquerschnittsfläche stufenlos verjüngt und mit dieser in Richtung zum dritten Befestigungsbereich 6 weitergeführt ist.

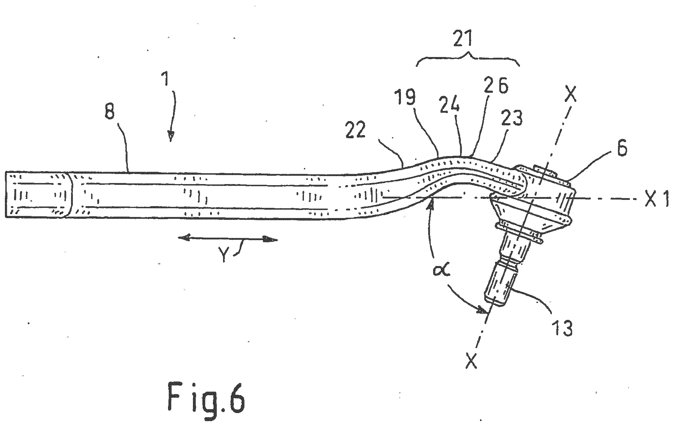

Wie in dem Ausführungsbeispiel nach Figur 4 gezeigt, kann der zweite Steg 23 einen zu dem Steigungswinkelbetrag des ersten Steges 22 unterschiedlichen, also bevorzugt flacheren Steigungswinkelbetrag aufweisen, wie auch beispielhaft der Figur 6 entnehmbar ist.

Die, die Basis 14 umgebenden Hochstege 16 sind in den Übergangsbereich 19 weitergeführt, verjüngen sich jedoch in Richtung zum dritten Befestigungsbereich 6. Weiter kann der Übergangsbereich 19 auch in seiner, in der Zeichnungsebene der Figur 4 gesehenen Quererstreckung in Richtung zum dritten Befestigungsbereich 6 verjüngend ausgeführt sein. Im Bereich des ersten Steges 22 überragen die sich verjüngenden Hochstege 16 die noch weiter geführte Basis 14, wobei im Bereich des Zenits 24 und im weiteren Verlauf zum dritten Befestigungsbereich 6 ein flächiger Übergangsbereichabschnitt 26 gebildet ist. Der Übergangsbereichabschnitt 26 kann als Hohlkörper ausgebildet, oder bevorzugt aus einem Vollmaterial gebildet sein.

Der Übergangsbereich 19 ist mit seinen beiden Stegen 22 und 23 bzw. seinem Übergangsbereichabschnitt 26 bevorzugt so ausgeführt und vorzugsweise so mit dem dritten Befestigungsbereich 6 verbunden, dass der dritte Befestigungsbereich 6 mit seiner Mittelachse X winklig zu einer Mittelachse X1 des Radschenkels 8 angeordnet ist. Wie beispielhaft in Figur 6 dargestellt, ist ein Winkel a zwischen den beiden Mittelachsen X und X1 vorzugsweise als spitzer Winkel (<90°) ausgeführt.

In Figur 7 ist die Einbaulage des Querlenkers 1 dargestellt. In der Einbaulage greift der Zapfen 13, welcher in bekannter Art in dem dritten Befestigungsbereich 6 aufgenommen ist, von unten in die korrespondierende Aufnahme des Radträgers.

Der Querlenker 1 gemäß den Ausführungsbeispielen zu den Figuren 2 bis 7 ist mit seinem Grundkörper 2 aus einem Leichtmetall, bevorzugt aus Aluminium beispielhaft einstückig beispielsweise in einem Gussverfahren hergestellt, wobei die Herstellungsart hierauf natürlich nicht beschränkt sein soll.

Mit dem Querlenker nach den Ausführungsbeispielen zu den Figuren 4 bis 7 wird ein Querlenker 1 zur Verfügung gestellt, welcher in seinem bevorzugt buckelartigen Übergangsbereich 19 eine vorbestimmte, gezielte Deformationscharakteristik aufweist. Würde ein an dem Radträger befestigtes Rad gegen eine Fahrbahnerhebung, zum Beispiel frontal oder winklig gegen z.B. einen Bordstein stoßen bzw. prallen oder quer anschlagen, würde sich der buckelartige Übergangsbereich 19 entlang der Längsrichtung Y des Radschenkels 8 verformen, so dass der Übergangsbereich 19 einen erheblichen Anteil der Aufprallenergie in Verformungsenergie umwandelt. Hierbei würden sich die beiden Stege 22 und 23 quasi zusammenfalten, wobei der gesamte Übergangsbereich 19 entlang der Längsrichtung Y des Radschenkels 8 verformt würde. Auch ein Verbiegen der gesamten Verformungs- oder Deformationszone 21 oder auch Teilstücke daraus (etwa 19, 22, 23 oder 26) ist bei diesem vorteilhaft ausgebildeten Querlenker denkbar um den erheblichen Anteil der Aufpraftenergie aufzunehmen und diese in Verformung umzuwandeln. Damit ist sichergestellt, dass die Zapfenverbindung zwischen dem Radträger und dem Querlenker 1 nicht zerstört wird. Weiter kann so ein erheblicher Anteil der Aufprallenergie von dem Fahrzeugrahmenelement ferngehalten werden, so dass also quasi eine Doppelfunktion mit dem vorteilhaft ausgeführten Querlenker 1 erreicht wird. Zum einen wird die Zapfenverbindung zum Radträger und zum anderen die Anlenkung des Querlenkers an dem Fahrzeugrahmenelement, beispielsweise an dem Hilfsrahmen vor den bisher geradlinig und vollständig (Stand der Technik Figur 1) übertragenen Aufprallenergien geschützt. Denn mit der zweckmäßigen Ausgestaltung des Übergangsbereiches 19 gemäß der Erfindung wird die Aufprallenergie um den Betrag der hier aufgenommenen Verformungsenergie reduziert.

Bei den in den Figuren 2 bis 7 dargestellten Ausführungsbeispielen ist ein Querlenker 1 mit drei Befestigungsbereichen 3, 4 und 6 beschrieben. Selbstverständlich soll die Erfindung nicht auf dieses bevorzugte Ausführungsbeispiel beschränkt sein. Vielmehr soll die Erfindung auch jene Querlenker bzw. Lenkerelemente umfassen, welche zumindest über einen Befestigungsbereich mit einem Radträger verbindbar sind.

### Bezugszeichenliste:

- 1: Querlenker
- 2: Grundkörper
- 3: erster Befestigungsbereich
- 4: zweiter Befestigungsbereich
- 5:
- 6: dritter Befestigungsbereich
- 7: Rahmenschenkel
- 8: Radschenkel
- 9: Zapfen
- 10:
- 11: Lagerelement
- 12: Aufnahme
- 13: Zapfen
- 14: Basis
- 15:
- 16: Hochstege
- 17: H-Profil
- 18: Ausnehmung
- 19: Übergangsbereich
- 20:
- 21: Verformungs- oder Deformationszone
- 22: Erster Steg von 19
- 23: Zweiter Steg von 19
- 24: Zenit zwischen 22 und 23
- 25:
- 26: Übergangsbereichabschnitt
- X: Mittelachse von 6
- X1: Mittelachse von 8
- Y: Längsrichtung von 8

## Patentansprüche

1. Querlenker, der aus einem Leichtmetall gebildet ist, mit einem Grundkörper (2), der zumindest einen ersten Befestigungsbereich (3) zum Anlenken an ein Fahrzeugrahmenelement und zumindest einen weiteren Befestigungsbereich (6) zum Anlenken an einen Radträger aufweist, wobei der Grundkörper (2) zumindest einen Radschenkel (8) mit einer Basis (14) aufweist, wobei der Grundkörper (2) die flächige Basis (14) umgebende Hochstege (16) aufweist, so dass der Grundkörper (2) im Querschnitt gesehen ein H-Profil (17) aufweist,
**gekennzeichnet durch**
einen gebogen verlaufenden zwischen dem Radschenkel (8) und dem weiteren Befestigungsbereich (6) angeordneten Übergangsbereich (19), welcher zwei Stege (22,23) aufweist, wobei der erste Steg (22), an dem sich der zweite Steg (23) einstückig anschließt, aus der Ebene der Basis (14) herausführt, und der sich darin anschließende zweite Steg (23) gegenläufig dazu wieder in Richtung zur Ebene der Basis (14) zurückführt, und so eine in Längsrichtung (Y) des Radschenkels (8) wirkende Verformungs- oder Deformationszone (21) bildet, wobei sich der Übergangsbereich (19) im Bereich seines ersten Steges (22) bis auf eine Grenzquerschnittsfläche verjüngt, wobei der Übergangsbereich (19) nach Erreichen der Grenzquerschnittsfläche mit dieser in Richtung zum weiteren Befestigungsbereich (6) weitergeführt ist, wobei die Hochstege (16) in den Übergangsbereich (19) weitergeführt sind und sich in Richtung zum weiteren Befestigungsbereich (6) bis auf die Grenzquerschnittsfläche verjüngen.

2. Querlenker nach Anspruch 1,
**dadurch gekennzeichnet, dass**
sich der Übergangsbereich (19) von seiner zum Radschenkel (8) orientierten Seite in Richtung zum weiteren Befestigungsbereich (6) gesehen stufenlos bis zu der Grenzquerschnittsfläche kontinuierlich verjüngt.

## Claims

1. Transverse link, which is formed from a light metal, having a main body (2), which has at least one first fixing region (3) for pivotal attachment to a vehicle frame element and at least one further fixing region (6) for pivotal attachment to a hub carrier, the main body (2) having at least one wheel limb (8) with a base (14), whereby the main body (2) has raised webs (16) surrounding the flat base (14), with the result that the main body (2) has an H-profile (17) when viewed in cross section,
**characterized by**
a transitional region (19) with a curved profile, which is arranged between the wheel limb (8) and the further fixing region (6), which transitional region (19) has two webs (22, 23), the first web (22) which is adjoined integrally by the second web (23) leading out of the plane of the base (14) and the second web (23) which adjoins it leading back again in the direction of the plane of the base (14) in the opposite direction to the said first web (22), and thus forms a deformation zone (21) acting in the longitudinal direction (Y) of the wheel limb (8), whereby the transitional region (19) tapers to a limiting cross-sectional area in the region of the first web (22) thereof and, after reaching the limiting cross-sectional area, the transitional region (19) is continued with this cross-sectional area in the direction of the further fixing region (6), whereby the raised webs (16) being continued into the transitional region (19) and tapering to the limiting cross-sectional area in the direction of the further fixing region (6).

2. Transverse link according to Claim 1,
**characterized in that**
the transitional region (19) tapers continuously without a step to the limiting cross-sectional area from the side of said region oriented toward the wheel limb (8) in the direction of the further fixing region (6).

## Revendications

1. Bras oscillant latéral, formé de métal léger, comprenant un corps de base (2) qui présente au moins une première région de fixation (3) destinée à s'articuler sur un élément de châssis de véhicule et au moins une région de fixation supplémentaire (6) destinée à s'articuler sur un support de roue, le corps de base (2) présentant au moins une branche de roue (8) avec une base (14), là où le corps de base (2) présente des nervures verticales (16) entourant la base plane (14), de sorte que le corps de base (2), vu en coupe transversale, présente un profilé en H (17), **caractérisé par**
une région de transition (19) s'étendant sous forme courbe entre la branche de roue (8) et la région de fixation supplémentaire (6), laquelle présente deux nervures (22, 23), la première nervure (22), à laquelle se raccorde d'une seule pièce la deuxième nervure (23), étant guidée hors du plan de la base (14) et la deuxième nervure (23) s'y raccordant revenant en sens inverse de celle-ci à nouveau dans la direction du plan de la base (14), et formant ainsi une zone de déformation (21) agissant dans la direction longitudinale (Y) de la branche de roue (8), là où la région de transition (19) se rétrécit dans la région de sa première nervure (22) jusqu'à une surface limite en section transversale, la région de transition (19) se poursuivant, après avoir atteint la surface limite en section transversale, avec cette dernière dans la direction de la région de fixation supplémentaire (6), là où les nervures verticales (16) se poursuivant dans la région de transition (19) et se rétrécissant dans la direction de la région de fixation supplémentaire (6) jusqu'à la surface limite en section transversale.

2. Bras oscillant latéral selon la revendication 1, **caractérisé en ce que**
la région de transition (19) se rétrécit depuis son côté orienté vers la branche de roue (8) dans la direction de la région de fixation. supplémentaire (6) de manière uniforme en continu jusqu'à la surface limite en section transversale.
